# EUROPEAN PATENT APPLICATION

(11) **EP 1 557 786 A2**
(43) Date of publication of application: **27.07.2005**
(21) Application number: 05100349.9
(22) Date of filing: 20.01.2005
(51) Int. Cl.: G06K 15/12, B41J 2/45

(54) **Parallel beam to beam uniformity correction**

(30) Priority: 21.01.2004 US 762179
(71) Applicant: Xerox Corporation, Rochester, New York 14644 (US)
(72) Inventor: Vazan, Shahriar, Northrich, CA 91326 (US)
(74) Representative: Grünecker, Kinkeldey, Stockmair & Schwanhäusser Anwaltssozietät

(57) **Abstract**

An electro-optical system for adjusting beam to beam intensity non-uniformity in a multi-beam scanning system is disclosed. The electro-optical system consists of NxM array of light beams and NxM array of photodetectors wherein optical means deflect the light beams onto the photodetector array. A circuit consisting of NxM array of programmable laser drivers for each light beam and having an NxM array of feedback loops is used to adjust an intensity of each beam through the programmable laser drivers wherein each programmable laser driver uses the photodetector array as a reference source to correct for beam to beam uniformity correction.

## Description

### CROSS-REFERENCE TO RELATED APPLICATION

Attention is directed to copending application Attorney Reference Number D/A3412Q, entitled, "Parallel Beam to Beam Power Correction" filed concurrently herewith. The disclosure of this copending application is hereby incorporated by reference in its entirety.

### BACKGROUND

The present invention relates generally to the field of optical imaging. More specifically, the invention relates to xerographic printers and, more particularly, to xerographic printers that incorporate a Vertical Cavity Surface Emitting Laser (VCSEL) array w hose output is corrected by beam intensity variations through the use of process control electronics.

Polygon Raster Output Scanner (ROS) printers typically consist of a modulating laser light source, a polygon scanning beam deflector, an optical system of lenses and mirrors, a xerographic marking engine and the electronics to control printer operation. The ROS is positioned in an optical scan system to write an image on a moving photoreceptor surface. In the ROS system, a modulated beam is directed onto the facets of a rotating polygon mirror, which then sweeps the reflected beam across the photoreceptor surface. Each sweep exposes a raster line to a linear segment of a video signal image.

However, the use of a rotating polygon mirror presents several inherent problems. Bow and wobble of the beam scanning across the photoreceptor surface result from imperfections in the mirror or even slight misangling of the mirror or from the instability of the rotation of the polygon mirror. These problems typically require complex, precise and expensive optical elements between the light source and the rotating polygon mirror and between the rotating polygon mirror and the photoreceptor surface. Additionally, optically complex elements are also needed to compensate for refractive index dispersion that causes changes in the focal length of the imaging optics of the ROS.

The modulating laser light source may consist of a Vertical Cavity Surface Emitting Laser (VCSEL) array. The VCSEL array may be either a one or two-dimensional array of individual laser sources. Each individual laser source in the VCSEL array has a corresponding drive circuit which may be used to generate a beam to expose a corresponding area on a moving photoreceptor in response to video data information applied to the drive circuits of the VCSEL array. The photoreceptor is advanced in the process direction to provide a desired image by the formation of sequential scan lines generated by the beam to beam exposure delivered from the VCSEL array.

Current beam to beam uniformity correction in multi-beam ROS systems multiplexes one photo detector and one loop-back system among all the beams. This is accomplished by sequentially selecting each beam and comparing the output of the photo detector for that beam with a "reference " to decide whether to increase or decrease the power intensity in the selected beam. This sequential detection and power adjustment process takes a few micro-seconds per beam. In a high performance multi-beam ROS system the beam to beam uniformity correction has to be fine-tuned for each beam per scan line. In a VCSEL ROS system incorporating a two-dimensional array for producing a plurality of beams, the sequential beam to beam uniformity correction may take up to a few hundred micro-seconds. This uniformity correction scheme presents an amount of delay time for each line to be printed such that it renders the sequential multiplexing of all the beams unusable for high speed/high performance platforms.

### SUMMARY

An electro-optical system for adjusting beam to beam intensity nonuniformity in a multi-beam scanning system is disclosed. The electro-optical system consists of NxM array of light beams and NxM array of photodetectors wherein optical means deflect the light beams onto a photodetector array. A circuit consisting of NxM array of programmable laser drivers for each light beam and having an NxM array of feedback loops is used to adjust an intensity of each beam through the programmable laser drivers wherein each programmable laser driver uses the photodetector array to adjust for beam to beam uniformity correction.
In one embodiment of the method according to claim 7, the method further comprises:
varying an amount of current into each said light source for adjusting said beam intensity by said programmable drivers using digital to analog converters.
In a further embodiment said array of feedback loops further comprises:
summing said output power from each said photodectector with an output from said digital to analog converters wherein said output from said analog to digital converters having a value set to produce beam to beam uniformity.
In a further embodiment the method further comprises:
storing adjusted calibrated uniformity values in memory derived from simultaneously adjusting said beam intensity for use by said digital to analog converters for varying said amount of current into each said light source.
In a further embodiment the method further comprises:
compensating for aging effects of said light sources by using coefficient values derived empirically and stored in memory for use by said digital to analog converters for varying said amount of current into each said light source.
In a further embodiment the method further comprises:
compensating for aging effects of said light sources by using coefficient values derived mathematically and stored in memory for use by said digital to analog converters for varying said amount of current into each said light source.
In a further embodiment the method further comprises:
producing said light beams using a vertical cavity surface emitting laser array.
In one embodiment of the printer according to claim 8, the printer further comprises non-volatile memory for compensating for long term aging of said light beams by using stored values derived empirically in said non-volatile memory.
In a further embodiment the printer further comprises non-volatile memory for compensating for long term aging of said light beams by using stored values derived mathematically in said non-volatile memory.
In a further embodiment said NxM array of light beams is a vertical cavity surface emitting laser array.
In a further embodiment said programmable laser driver uses an eight-bit digital to analog converter.

### BRIEF DESCRIPTION OF THE DRAWINGS

The drawings are not to scale and are only for purposes of illustration.

**FIG. 1** is a schematic view of a ROS printing system utilizing a Vertical Cavity Surface Emitting Laser array;

**FIG. 2** is a prior art timing diagram illustrating the amount of delay time using sequential correcting for beam to beam uniformity;

**FIG. 3** is a timing diagram illustrating the amount of delay time using parallel beam to beam uniformity correction;

**FIG. 4** is a graph showing a correction coefficient curve which may be used for long term power compensation; and

**FIG. 5** is a simplified circuit diagram for calibrating and providing parallel beam to beam uniformity and power correction for the Vertical Cavity Surface Emitting Laser array in the ROS printing system shown in **FIG. 1**.

### DETAILED DESCRIPTION

A multi-beam scanning system comprising an array of light sources each having a programmable reference mechanism or driver for producing a corresponding power intensity of light beams is described. The multi-beam scanning system includes a beam splitter to deflect the light beams onto a photodetector array wherein an array of feedback loops simultaneously adjust the power intensity for each light beam by using the programmable reference mechansims or drivers. Each programmable driver uses a photodetector on the photodetector array as a reference source to adjust for parallel beam to beam uniformity correction produced from the array of light sources.

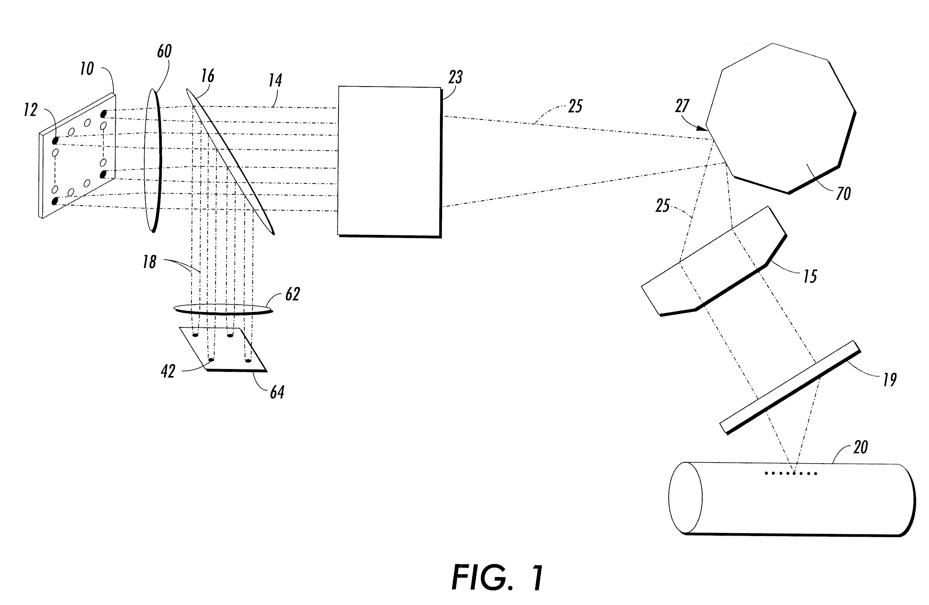

Reference is now made to **FIG. 1** wherein there is shown a schematic view of a ROS printing system incorporating an optical source **10.** The optical source may be either a one or two-dimensional array of light sources each light source producing light beams of unequal power intensity. The optical source **10** shown is a two dimensional NxM laser array **10** of Vertical Cavity Surface Emitting Lasers (VCSELs), all emitting nominally the same wavelength and same polarization state. The individual VCSELs **12** in the VCSEL NxM array **10** are arranged vertically and horizontally in each scan plane direction with equal center to center spacing between the individual VCSELs **12**. The VCSEL NxM array **10** may be monolithic in one embodiment wherein "N" and "M" may be any combination of integer values greater than zero to describe the two-dimensional array.

Returning to the line projection architecture of the ROS printing system shown in **FIG. 1,** the VCSELs **12** each emit beams **14** through a collimator lens **60** wherein the beams **14** pass through a beam splitter or mirror **16** and then through a pre-polygon lens system **23**. The lens system **23** focuses the beams **14** into a controlled energy distribution beam **25** that is reflected from the mirrored facets **27** of a rotating polygon scanner **70**. With the rotation of polygon **70**, the light beam **25** is reflected from each illuminated facet **27** and passes through a series of post-polygon lenses **15** and **19**, respectively, which scans the beam **25** across a surface of a photoreceptor **20**.

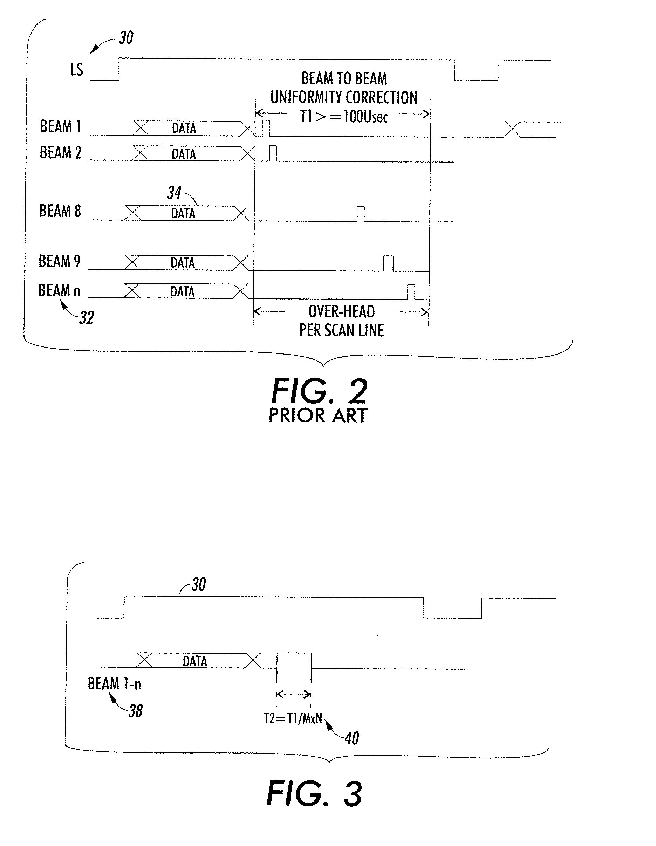

Referring now to **FIG. 2**, there is shown a prior art timing diagram illustrating the amount of delay time using sequential correcting for beam to beam uniformity. Beam to beam uniformity correction in multi-beam ROS systems multiplexes one photo detector and one loop-back system among all the beams. This may be accomplished by sequentially selecting each beam **32** and comparing the output of a photo detector for that beam with a "reference " to decide whether to increase or decrease the power intensity in the selected beam **32.** As shown in **FIG. 2,** a sequential detection and power adjustment process may take greater than 100 micro-seconds for beam to beam correction during line synchronization **30**. What would be desirable is a parallel detection and power adjustment scheme. As shown in **FIG. 3** using parallel beam to beam uniformity correction reduces the time **40** to that of adjusting the power correction for an individual VCSEL beam **14** when calibrating and adjusting for all the beams **38** during the line synchronization operation **30**.

Turning back to **FIG. 1**, each individual beam **14** from each individual VCSEL **12** is split by the beam splitter **16** for generating a beam **18** for passing through an imaging lens **62** for receipt on an photo detector plane **64** having photo detectors **42.** The photo detector plane **64** has the photo detectors **42** arranged in a NxM array to match the corresponding VCSELs **12** on the VCSEL NxM array **10.** All the VCSELs in the NxM array **10** may now be addressed at the same time in parallel on the photo detector plane **64**. The output of each photo detector **42** may now be used for each beam **18** corresponding to a beam **14** from the VCSEL array **10** as a "reference " to decide whether to increase or decrease the power intensity for a given selected VCSEL **12**.

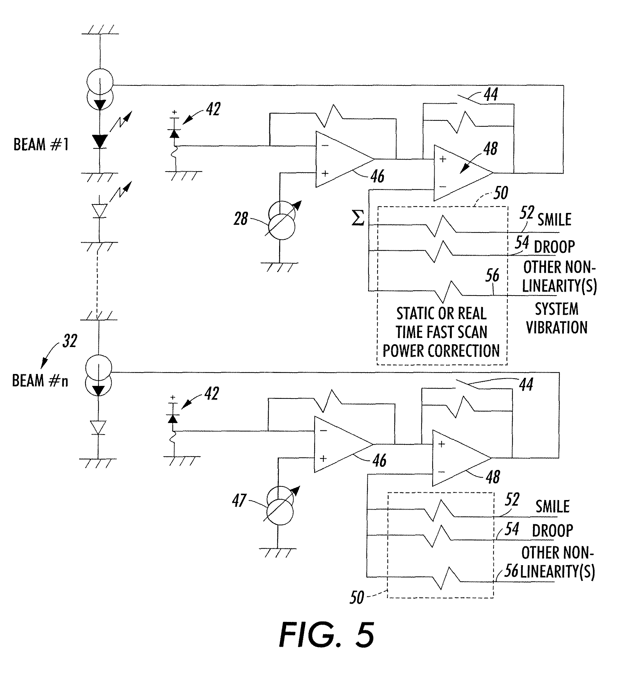

**FIG. 5** is a simplified circuit diagram for calibrating and providing parallel beam to beam uniformity and power correction for a VCSEL ROS of NxM array beams using the architecture shown in **FIG. 1**. The following is one method in embodiments that may be used to calibrate the multi-beam VCSEL array **10** for parallel beam to beam uniformity correction. One method used to obtain calibration values is to first turn all the beams **32** "ON" and close the switch S1 **44** shown in **FIG. 5**. Next, the intensity of each beam **18** at the photo detector plane **64** is either manually or automatically calibrated for a nominal value on the surface of the photoreceptor **20** through use of a programmable uniformity control reference mechanism or driver. The programmable uniformity control reference mechanism or driver may be in one embodiment an eight "8" bit digital to analog (D to A) converter **28** that varies the amount of current into each light source for varying the intensity of each corresponding light beam produced. A photo detector **42** is used to measure the output power intensity of each beam **18** for the corresponding beam **14**. Therefore, each VCSEL **12** has a corresponding calibrated D to A converter **47** used to uniformly adjust the intensity of each beam **14** such that they are all of equal strength.

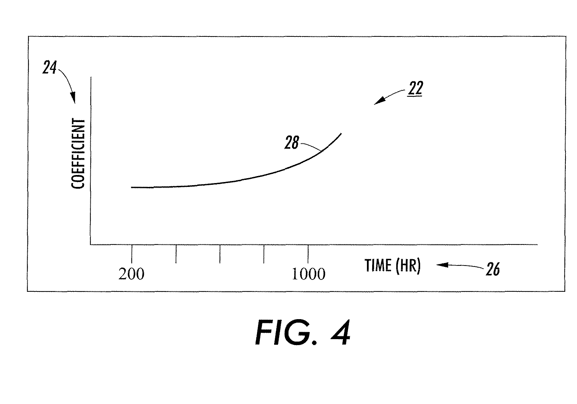

The calibrated uniformity values corresponding to each beam may be stored in a non-volatile memory location. **FIG. 4** illustrates a graph showing one example of a correction coefficient curve for long term power compensation wherein the uniformity values may be modified to compensate for long term aging of the VCSELs **12** at predetermined intervals. This may be determined through cycle testing during machine set-up time, or by multiplying the uniformity values by a time varying empirically/mathematically derived coefficient to compensate for long term power compensation. The correction coefficient may also be implemented within the D to A converters as part of the calibration process and for real time operation as described below.

Referring once again to **FIG. 5**, for real time operation, the calibrated uniformity reference values for each beam are set by loading these values into the D to A converters **28** through **47** for each beam during machine set-up time. Next, switch S1 **44** is closed simultaneously for each VCSEL **12** to establish a closed loop for beam to beam uniformity correction. Summing amplifier **46** uses the value from the photo detectors **42** and sums it with the different reference values stored in each of the D to A converters. By dedicating one cycle time, ≈2 Usec or less, per scan line, parallel beam to beam uniformity correction is achieved. More specifically, during this cycle, all beams are turned to "ON" and the closed-loop automatically modifies the light intensity of each beam to match that of the reference value. This reduces the existing sequential/serial approach to the power adjustment of the light beams from an unacceptable level of a few hundred Usec per line to approximately 2 Usec per line or lower which provides a manageable overhead in very high performance imaging applications.

For real time parallel beam to beam power correction in the fast/slow scan direction the following method in embodiments may be implemented. As described above, the reference value for each beam is set by loading uniformity values into the D to A converters **28** during machine set-up time. Next, a closed-loop is once again established by closing switch S1 **44** and dedicating one cycle time, ≈2 Usec or less, per scan line for parallel beam to beam static power correction, i.e., loading a new value of a Smile **52** correction value into the corresponding input.

Real time/dynamic power correction **50** in the fast/slow scan direction may be implemented by driving other inputs into a summing amplifier **48** as depicted in **FIG. 5**. These inputs could represent Droop **54** or other system non-linearity(s) **56** like vibration that m ay be corrected by modulating the beam intensity statically or dynamically.

## Claims

1. A multi-beam scanning system, comprising:
an array of light sources each having a programmable driver for producing a corresponding light beam;
an array of photodetectors;
a beam splitter for deflecting said light beams onto said photodetector array; and
an array of feedback loops for simultaneously adjusting beam intensity using said programmable drivers for each said light beam wherein each said programmable driver uses said photodetector array as a reference source to adjust for parallel beam to beam uniformity correction produced by said array of light sources.

2. The multi-beam scanning system according to claim 1, wherein said programmable drivers uses digital to analog converters for varying an amount of current into each said light source for adjusting said beam intensity.

3. The multi-beam scanning system according to claim 2, further comprising memory for storing adjusted calibrated uniformity values derived from simultaneously adjusting said beam intensity for use by said digital to analog converters for varying said amount of current into each said light source.

4. The multi-beam scanning system according to claim 2, further comprising memory having stored values for compensating for aging effects of said light sources by using said coefficient values derived empirically and for use by said digital to analog converters for varying said amount of current into each said light source.

5. The multi-beam scanning system according to claim 2, further comprising memory having stored coefficient values for compensating for aging effects of said light sources by using said coefficient values derived mathematically for use by said digital to analog converters for varying said amount of current into each said light source.

6. The multi-beam scanning system according to claim 1, wherein said array of light sources is a vertical cavity surface emitting laser array.

7. A method, comprising:
generating a plurality of light beams from an array of light sources using programmable drivers;
splitting said plurality of light beams through a beam splitter for receipt on a photodecteor plane having an array of photodetectors;
measuring output power for each light beam using a photodector; and
adjusting an intensity for each said light beam simultaneously through an array of feedback loops using said programmable drivers wherein each programmable driver uses said photodetector array as a reference source to adjust for beam to beam uniformity correction produced by said array of light sources.

8. A printer, comprising:
an NxM array of laser sources each having a programmable laser driver for producing a light beam;
an NxM array of photodetectors;
optical means to deflect said light beams onto said photodetector array; and
an NxM array of feedback loops to simultaneously adjust an intensity for each beam in parallel through each said programmable laser driver wherein each programmable laser driver uses said photodetector array to correct for beam to beam uniformity correction.

9. The printer according to claim 8, wherein said programmable laser driver uses digital to analog converters for varying an amount of current into each light beam.

10. The printer according to claim 8, further comprising non-volatile memory for storing calibrated uniformity values corresponding to each light beam.
